# EUROPÄISCHE PATENTSCHRIFT

(11) **EP 1 902 882 B1**
(45) Veröffentlichungstag und Bekanntmachung des Hinweises auf die Patenterteilung: **17.07.2013**
(21) Anmeldenummer: 07017695.3
(22) Anmeldetag: 11.09.2007
(51) Int. Cl.: B60J 5/10, B60J 1/18, B60J 5/12, B60J 7/14

(54) **Kraftfahrzeug mit einem Steilheck und zumindest einem über die Dachbreite erstreckten öffnungsfähigen Dachteil**
Motor vehicle with a hatchback and at least one roof section stretching across the width of the retractable roof
Véhicule automobile doté d'un hayon arrière et d'au moins une partie de toit pouvant s'ouvrir et s'étendant sur la largeur du toit

(30) Priorität: 23.09.2006 DE 102006044997
(43) Veröffentlichungstag der Anmeldung: 26.03.2008
(73) Patentinhaber: Valmet Automotive Oy, 23500 Uusikaupunki (FI)
(72) Erfinder: Brockhoff, Franz-Ulrich, 49565 Bramsche (DE)
(74) Vertreter: Kronthaler, Schmidt & Coll.

(56) Entgegenhaltungen:
- EP-A- 1 588 881
- DE-A1- 10 345 123
- DE-U1- 20 208 001
- FR-A- 2 873 630

## Beschreibung

Die Erfindung betrifft ein Kraftfahrzeug mit einem Steilheck, einem heckseitigen Bewegungsrahmen, mit dem eine Heckklappe beweglich ist, und zumindest einem über die Dachbreite erstreckten öffnungsfähigen Dachteil nach dem Oberbegriff des Anspruchs 1.

Bei Steilheckfahrzeugen, die auch als Hatchback-Fahrzeuge bezeichnet werden, stellt sich die Schwierigkeit, dass zur Ablage von Dachteilen im Fahrzeugheck aufgrund von dessen nur geringer Längserstreckung wenig Raum zur Verfügung steht. Selbst wenn, wie aus der DE 103 45 123 A1 bekannt ist, ein heckseitiger Bewegungsrahmen, mit dem auch eine Heckklappe beweglich ist, zur Vergrößerung einer Eintrittsöffnung für Dachteile in die Karosserie nach hinten aufschwenkbar ist, ist das Dach nicht vollständig in der Karosserie ablegbar, sondern der hintere Bewegungsrahmen mit der daran gehaltenen Heckklappe bleibt stehen und überragt die Fensterbrüstungslinie nach oben bis zur Höhe der Oberkante des geschlossenen Daches. Dies ist optisch unvorteilhaft und verschlechtert das Cabriolet-Gefühl.

Der Erfindung liegt das Problem zugrunde, hier eine Verbesserung auch bei einem gattungsgemäßen Steilheckfahrzeug zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 8 angegeben.

Dadurch, dass bei dem erfindungsgemäßen Kraftfahrzeug der Bewegungsrahmen einen separat beweglichen oberen Bereich umfasst, der in Öffnungsstellung des Bewegungsrahmens nach vorne und abwärts verlagerbar ist, kann auch der obere, ansonsten die Fensterbrüstungslinie überragende Bereich in die Karosserie abgesenkt werden, ohne mit abgesenkten Seitenscheiben zu kollidieren. Diese Kollision würde sich ansonsten daraus ergeben, dass der obere Bereich des Bewegungsrahmens an seinem der Fensterbrüstung benachbarten Ende die volle Breite des Fensterschachts einnimmt und daher nicht in den darunter bereits belegten Raum abgesenkt werden kann. Mit der erfindungsgemäßen Ausbildung gelangt die breiteste Stelle des oberen Bereichs bei der Ablage weiter nach hinten, wo ein entsprechender Freiraum in der Karosserie vorgesehen werden kann. Erst dadurch ist eine Vollcabriolet-Stellung auch für ein Dach aus jeweils in sich starren Dachteilen - ein sog. Retractable Hardtop - ohne Ausbildung eines Stufenhecks oder andere Einschränkungen ermöglicht.

Insbesondere kann der separat bewegliche Bereich eine Heckscheibe sowie diese einfassende Karosseriesäulen, insbesondere C- oder D-Säulen, umfassen und somit in geschlossener Dachstellung einen dem geschlossenen Fahrzeug entsprechenden Heckabschluss mit einer zum Beladen praktisch oben schwenkbar angeschlagenen Heckscheibe ausbilden.

Dabei ist vorteilhaft die Heckscheibe gesondert beweglich gehalten, wodurch zum Beladen mit kleinen Dingen nur diese - und nicht die gesamte schwerere Heckklappe - geöffnet werden muss.

Sofern der Bewegungsrahmen eine mit diesem bewegliche Heckklappe trägt, wird mit dem Öffnen des Bewegungsrahmens auch diese mit nach hinten bewegt, so dass zwangsweise und ohne weitere Steuerungsmaßnahmen die Ein- oder Austrittsöffnung für das oder die Dachteil(e) vergrößert ist. Dabei kann die Heckklappe nach unten öffnungsfähig sein, um so bei geschlossenem Bewegungsrahmen und nach oben aufgeschwenkter Heckscheibe eine maximale Größe der Beladeöffnung zu ermöglichen.

Eine möglichst einfacher und optimierter Bewegungsablauf sieht vor, dass der separat bewegliche Bereich bei geöffnetem Bewegungsrahmen um eine quer zum Fahrzeug gelegene Achse nach vorne schwenkbar an einem unteren Bereich des Bewegungsrahmens angelenkt ist. Dann kommt beim Abwärtsschwenken des separat beweglichen Bereichs dessen breiteste Stelle automatisch in eine Stellung, die beim nachfolgenden Schließen des Bewegungsrahmens unterhalb der Fensterbrüstungslinie und gegenüber der Ausgangsstellung weiter nach hinten versetzt liegt.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

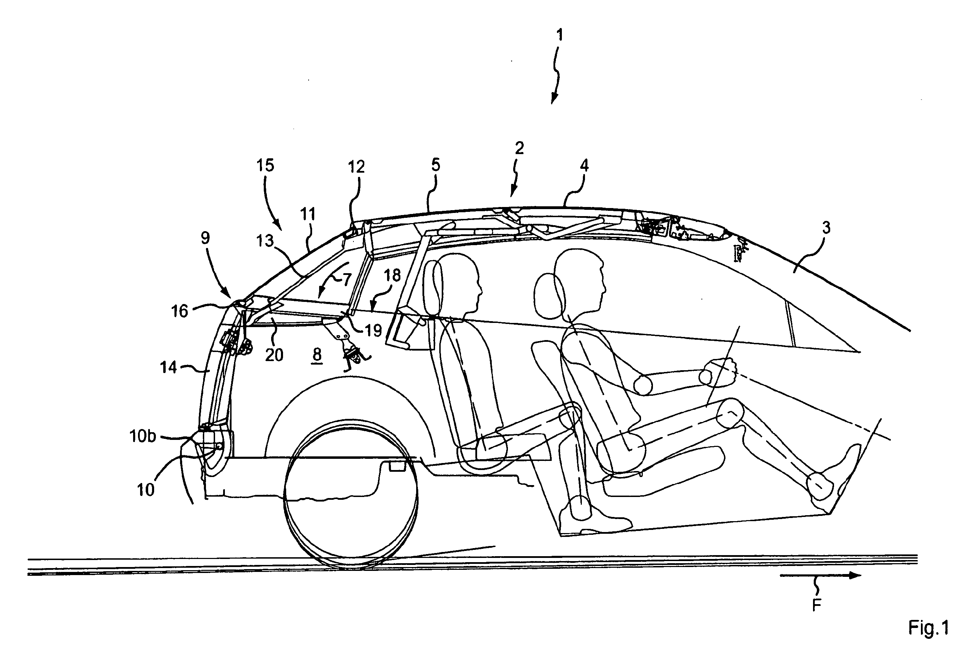

- Fig. 1: eine schematische Seitenansicht eines erfindungsgemäßen Cabriolet-Fahrzeugs mit geschlossenem Dach, geschlossenem Bewegungsrahmen und geschlossener Heckklappe sowie -scheibe,
- Fig. 2: das Fahrzeug nach Fig. 1 bei teilweise geöffneter Heckscheibe und Heckklappe,
- Fig. 3: das Fahrzeug nach Fig. 1 bei vollständig geöffneter Heckscheibe und Heckklappe,
- Fig. 4: das Fahrzeug nach Fig. 1 mit aus der geschlossenen Stellung heraus nach hinten öffnendem Bewegungsrahmen,
- Fig. 5: eine ähnliche Ansicht wie Fig. 4 bei vollständig geöffnetem Bewegungsrahmen und beginnender Absenkung der vorgeordneten Dachteile,
- Fig. 6: eine ähnliche Ansicht wie Fig. 5 bei vollständig geöffnetem Bewegungsrahmen und weiter fortschreitender Absenkung der vorgeordneten Dachteile,
- Fig. 7: eine ähnliche Ansicht wie Fig. 6 bei vollständig geöffnetem Bewegungsrahmen und vollständig abgelegten vorgeordneten Dachteilen,
- Fig. 8: eine ähnliche Ansicht wie Fig. 7 während des beginnenden Einschwenkens nach vorne und unten des oberen, separat beweglichen Bereichs des Bewegungsrahmens, während dessen unterer Bereich unverändert offen steht,
- Fig. 9: eine ähnliche Ansicht wie Fig. 8 bei weiter einschwenkendem oberen Bereich des Bewegungsrahmens,
- Fig. 10: eine ähnliche Ansicht wie Fig. 9 während des Schließens des Bewegungsrahmens mit dabei zum unteren Bereich konstant eingeschwenkt gehaltenem oberem Bereich,
- Fig. 11: eine ähnliche Ansicht wie Fig. 10 bei vollständig geschlossenem Bewegungsrahmen in VollcabrioletStellung,
- Fig. 12: eine ähnliche Ansicht der Vollcabriolet-Stellung nach Fig. 11, jedoch mit geöffneter Heckklappe zur Freigabe einer Beladeöffnung,
- Fig. 13: eine perspektivische Ansicht von schräg vorne auf den seitlichen Heckbereich des Fahrzeugs in geschlossener Stellung von Dach, Heckscheibe undklappe gemäß Fig.1,

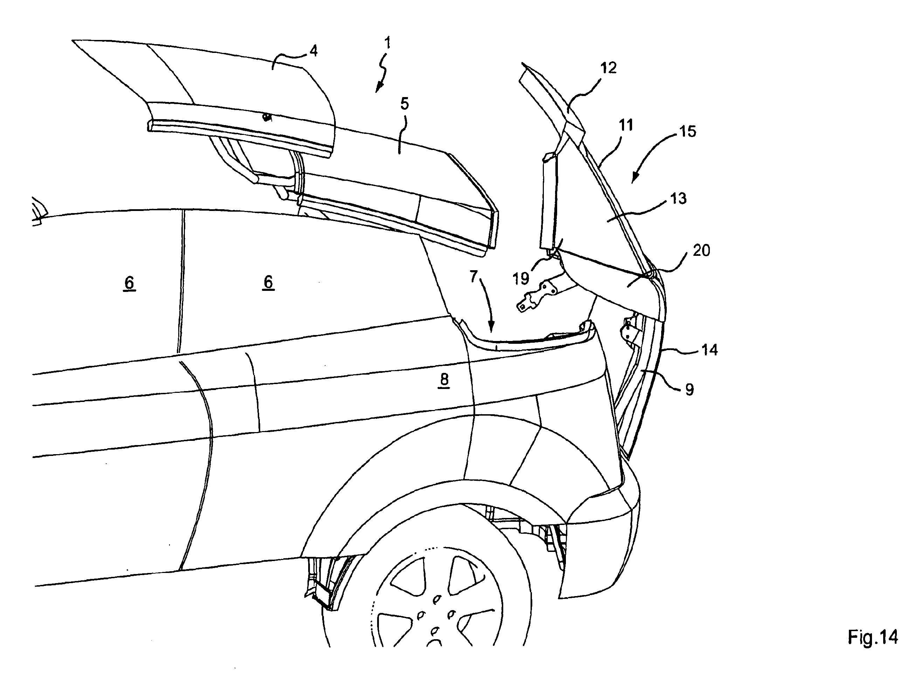

- Fig. 14: eine ähnliche Ansicht wie Fig. 13 in Öffnungsstellung des Bewegungsrahmens während der Ablage der vorgeordneten Dachteile, etwa entsprechend der Stellung nach Fig. 5,

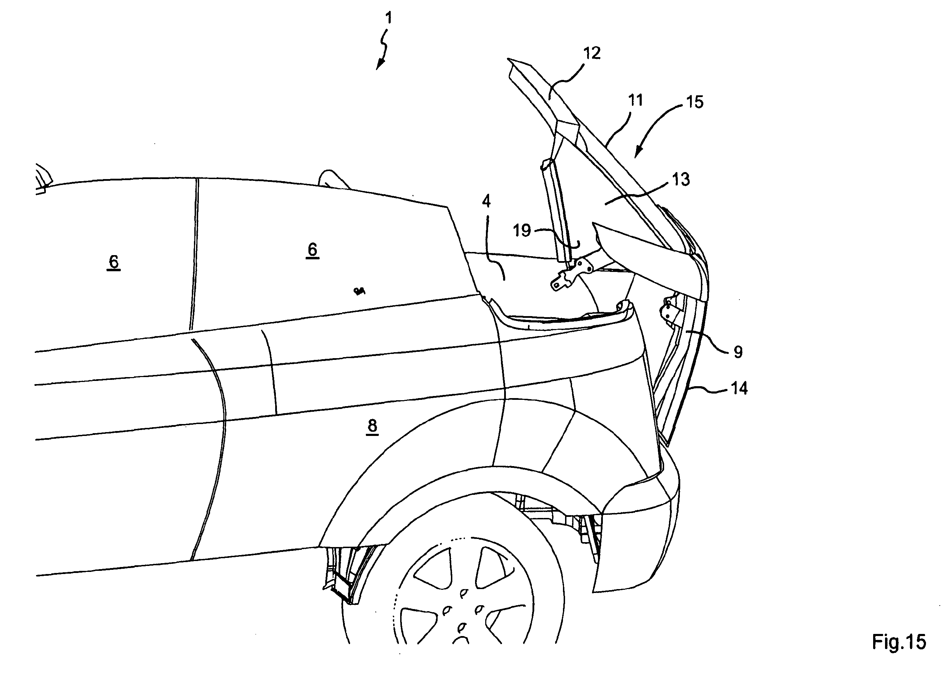

- Fig. 15: eine ähnliche Ansicht wie Fig. 14 bei vollständig abgelegten Dachteilen, etwa entsprechend der Stellung nach Fig. 7,

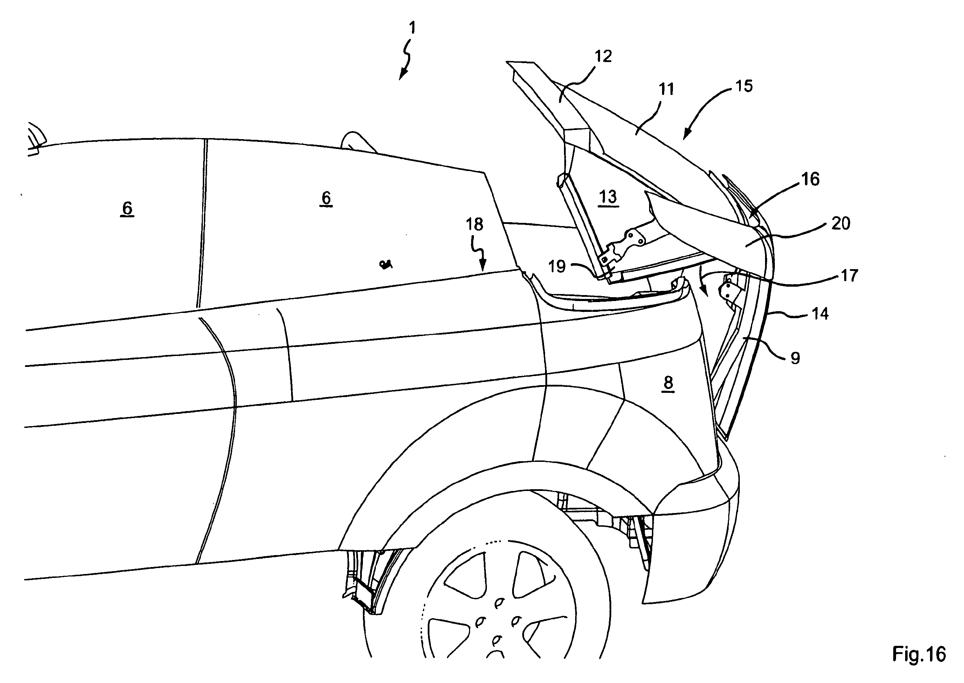

- Fig. 16: eine ähnliche Ansicht wie Fig. 15 während des Abwärtsschwenkens des oberen Bereichs des Bewegungsrahmens,

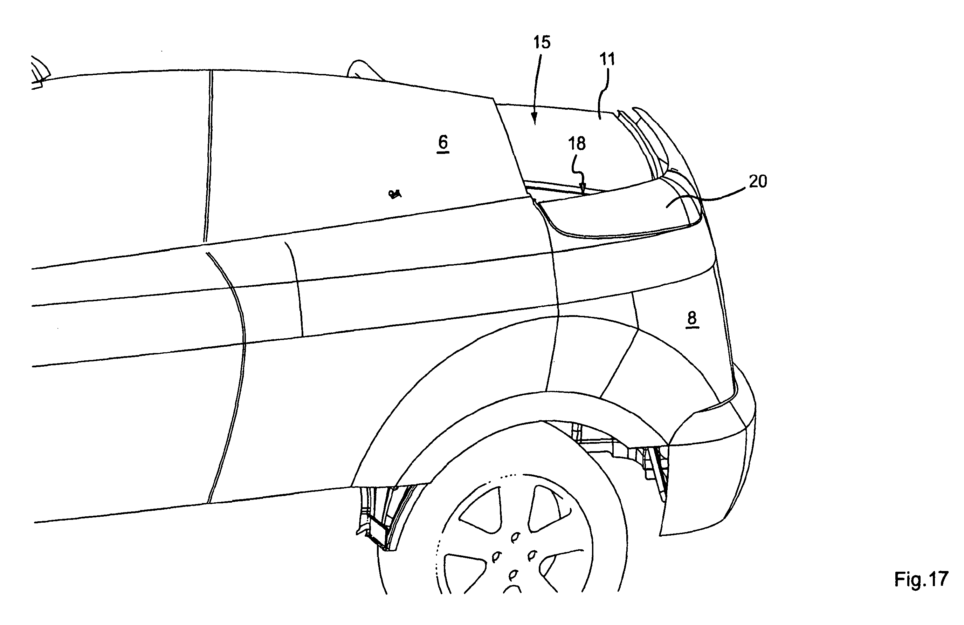

- Fig. 17: eine ähnliche Ansicht wie Fig. 16 bei zur Vollcabrioletstellung geschlossenem Bewegungsrahmen entsprechend der Stellung nach Fig. 10,
- Fig. 18: eine ähnliche Ansicht wie Fig. 17 mit zusätzlich aufgebrochen dargestellter Seitenwand der Karosserie und Durchblick auf die Lage der eingeschwenkten C-Säule.

Das erfindungsgemäße Cabriolet-Fahrzeug 1 kann, wie im gezeichneten Ausführungsbeispiel angedeutet, sowohl ein mit zumindest einer Rückbank versehenes vier- oder mehrsitziges Fahrzeug als auch ein Zweisitzer sein. Die Steilheckausbildung ist sowohl im Kleinwagenbereich als auch etwa bei Geländewagen häufig anzutreffen.

Das hier insgesamt bewegliche und in geschlossener Stellung mittelbar oder unmittelbar an einen Windschutzscheibenrahmen 3 anschließende Dach 2 umfasst im bezüglich der Fahrtrichtung F vorderen Teil einen öffnungsfähigen Dachabschnitt, der beispielsweise mehrere - hier zwei - separate und mit zumindest jeweils einem starren Rahmen versehene oder insgesamt plattenförmig ausgebildete Baueinheiten 4, 5 umfassen kann. Auch ist es möglich, dass die Dachteile alternativ nach Art eines Soft-Tops oder Rollo-ähnlich mit einem gemeinsamen Bezug überzogen sind.

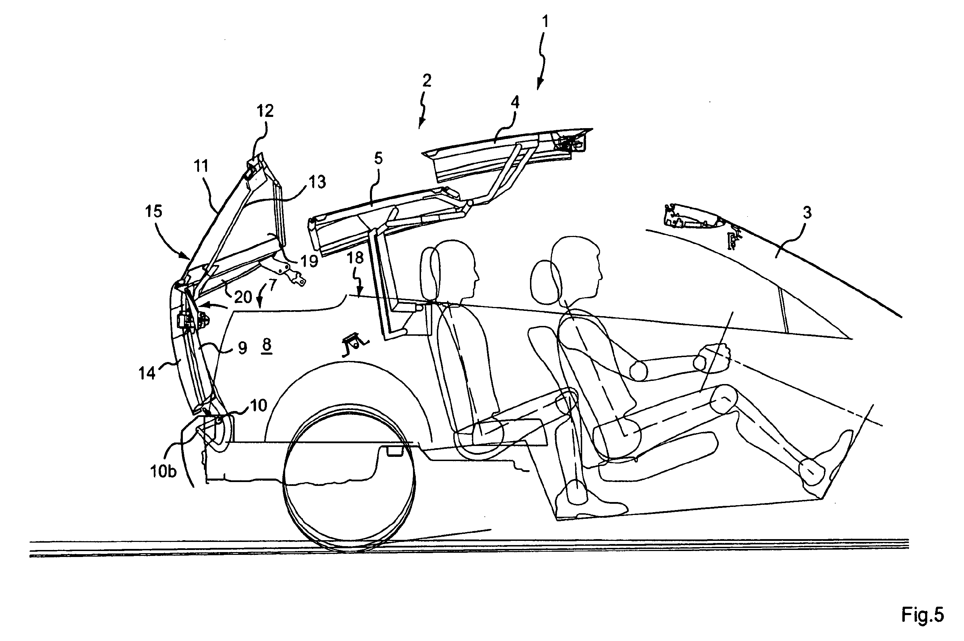

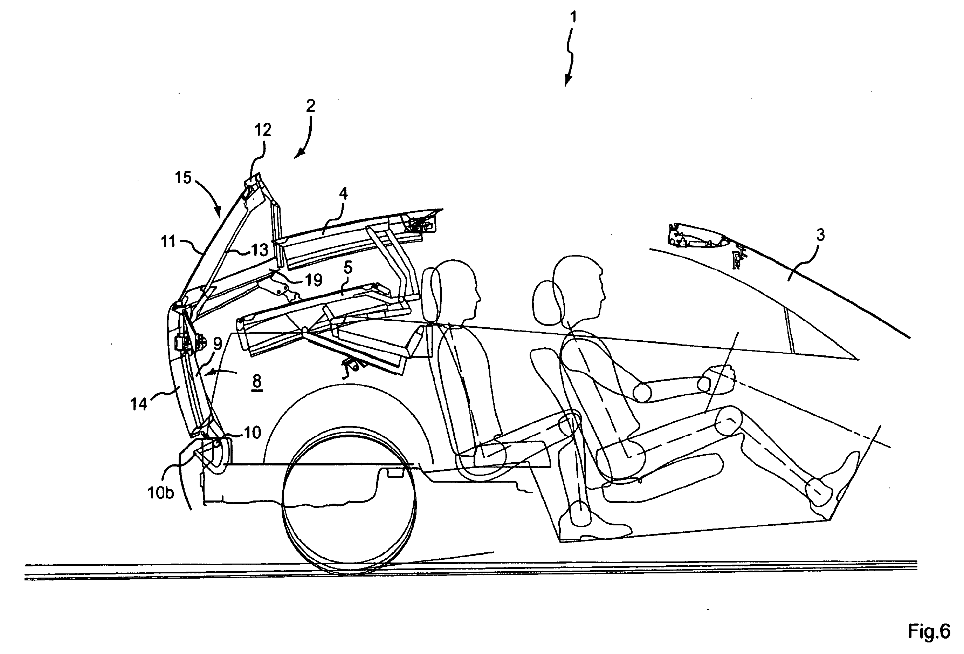

Die Dachteile 4, 5 erstrecken sich über die ganze Breite oberhalb von seitlichen Scheiben 6 und sind einem heckseitigen Bewegungsrahmen 9 vorgeordnet. Um die Dachteile 4, 5 trotz eines kurzen und steilen Hecks zu ihrer Öffnung im hinteren Fahrzeugbereich ablegen zu können, ist zur Vergrößerung einer Eintrittsöffnung 7 in die Karosserie 8 der Bewegungsrahen 9 heckwärts verlagerbar. Dieser ist hier für einen einfachen Bewegungsablauf nur beispielhaft als Schwenkrahmen ausgebildet und in seinem unteren Bereich um eine Fahrzeugquerachse 10 beweglich an der Karosserie 8 angelenkt. Der vorgeordnete öffnungsfähige Dachabschnitt mit den Dachteilen 4, 5 ist dann bei nach hinten aufgeschwenktem Bewegungsrahmen auf- und zubeweglich (Fig. 5 bis Fig. 7).

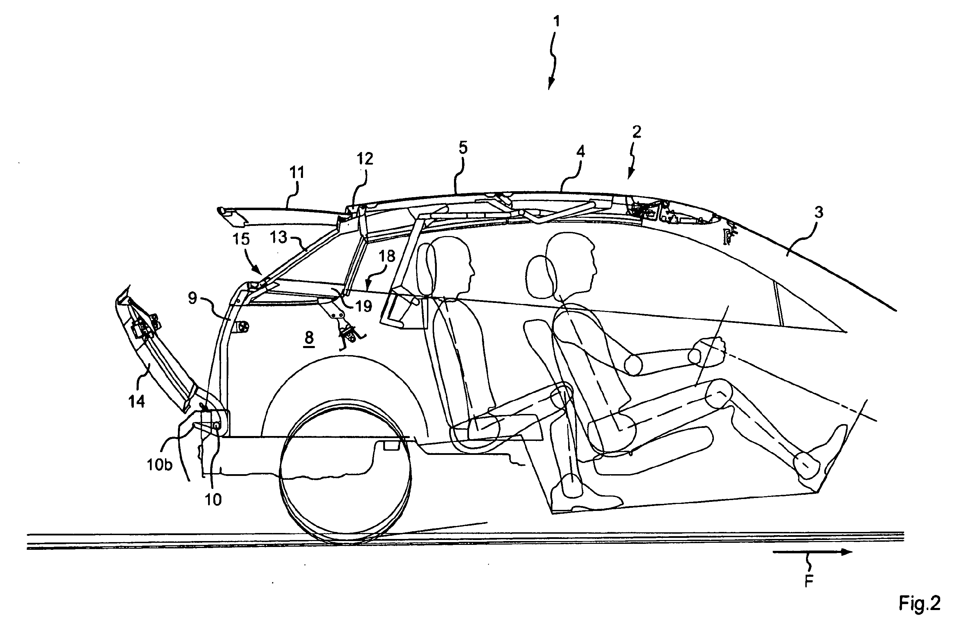

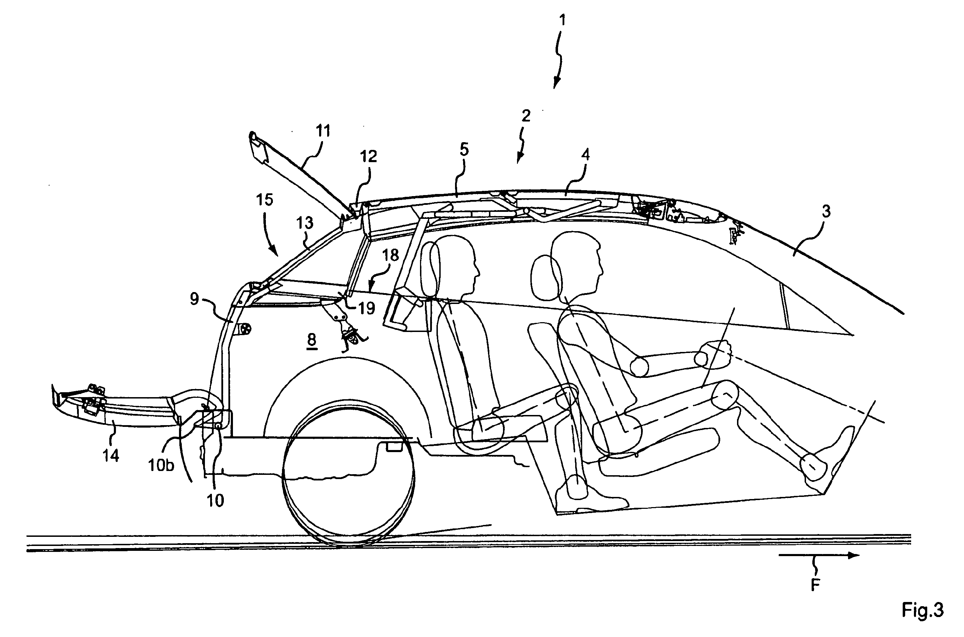

Der Bewegungsrahmen 9 erstreckt sich von der unteren Schwenkanlenkung an der Querachse 10 bis zu einem oberhalb einer Heckscheibe 11 gelegenen Querträger 12. Dieser dient zusammen mit seitlich anschließenden Tragsäulen 13, insbesondere C- oder D-Säulen, auch zur Einfassung der Heckscheibe 11. Diese ist an dem Querträger 12 derart gelenkig gehalten, dass sie gegenüber dem Bewegungsrahmen 9 gesondert beweglich, hier bei geschlossenem Bewegungsrahmen 9 nach oben aufschwenkbar ist (Fig. 2, Fig. 3). Die Aufschwenkbewegung kann separat oder gemeinsam mit einer Öffnung einer unten noch näher beschriebenen Heckklappe 14 erfolgen.

Weiterhin ist der Bewegungsrahmen 9 Träger der genannten und gemeinsam mit diesem aufbeweglichen Heckklappe 14, die bei geschlossenem Bewegungsrahmen 9 - hier um die an diesem gehaltene Achse 10b - separat vom Bewegungsrahmen 9 zu ihrer Öffnung nach unten schwenkbar ist (Fig. 2, Fig. 3). Bei geschlossenem Bewegungsrahmen 9 kann sich dann in der Stellung nach Figur 3 eine sehr große Beladeöffnung ergeben, die wie bei einem Kombifahrzeug vom Fahrzeugboden bis zur Höhe der Dachteile 4, 5 reicht. Zur Öffnung des Bewegungsrahmens 9 ist die Heckklappe 14 mit diesem an einem Schloss verriegelbar, so dass die Teile 9, 14 dann gemeinsam aufschwenken können (Fig. 5 ff.)

Alternativ kann die Heckklappe 14 beispielsweise auch seitlich angeschlagen sein. Die Heckscheibe 11 kann auch zu ihrer Öffnung abwärts in die Heckklappe 14 verfahrbar sein.

Zusätzlich umfasst der untere Teil des Bewegungsrahmens hier seitlich nach vorne ragende Verkleidungen 20, die in zugeschwenkter Stellung die Fensterbrüstungslinie 18 nach hinten verlängern und in geschlossener Dachstellung von oben gegen die seitlichen Säulen 13 dichten.

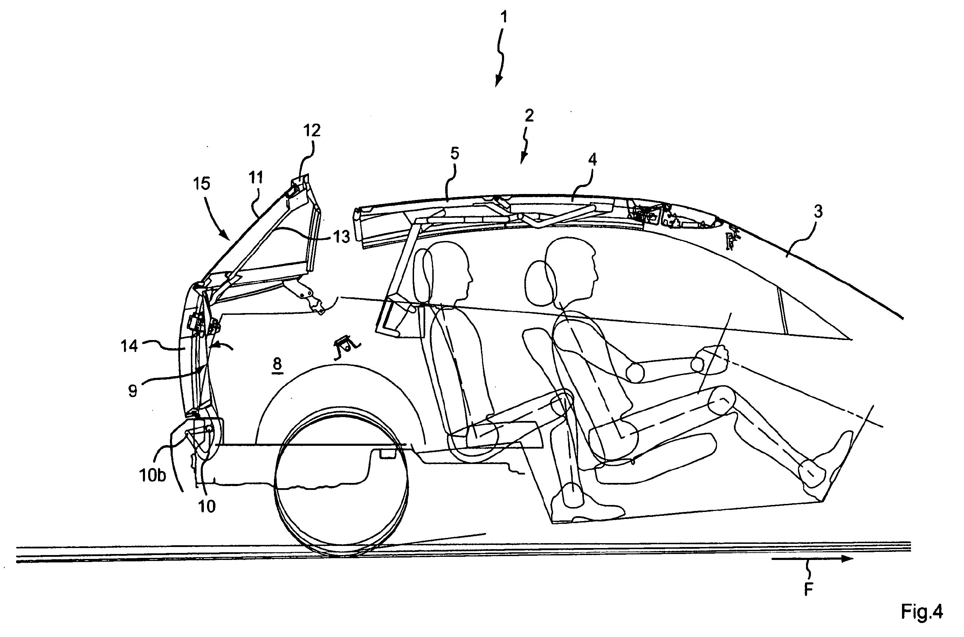

Der Bewegungsrahmen 9 ist über seine Höhenerstreckung nicht insgesamt starr, sondern umfasst einen separat beweglichen oberen Bereich 15, der in Öffnungsstellung des Bewegungsrahmens 9 zum Durchtritt der Dachteile 4, 5 (Fig. 4 bis Fig. 7) nach vorne und abwärts verlagerbar ist. Diese Abwärtsverlagerung ist hier eine reine Schwenkbewegung in Richtung des Pfeils 17 um eine Querachse 16 des Bewegungsrahmens 9. Auch eine überlagerte Bewegung, zum Beispiel über ein Mehrgelenk gesteuert, kommt in Betracht.

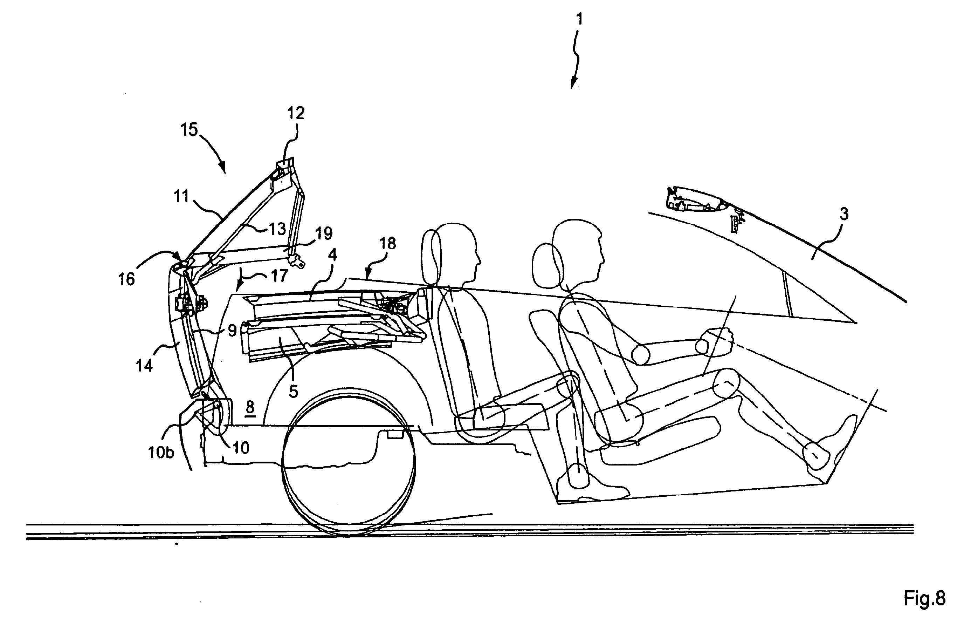

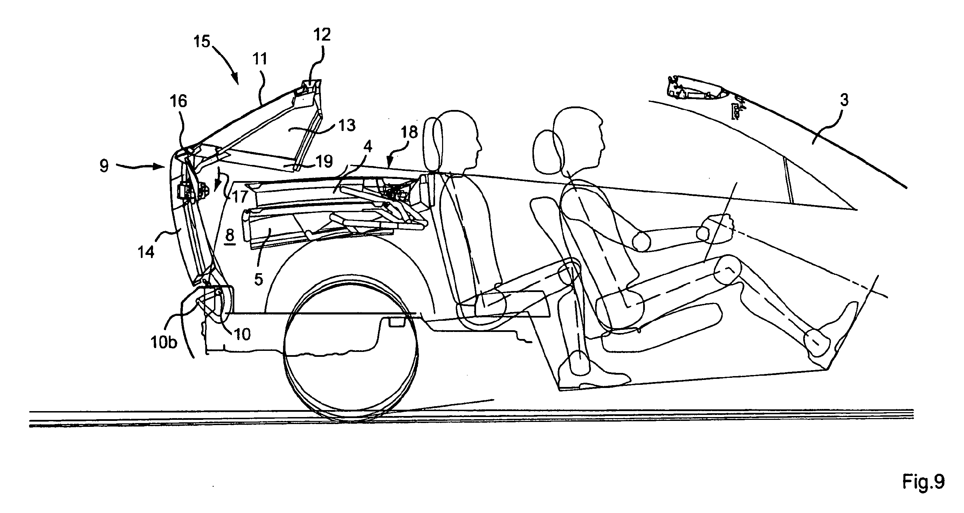

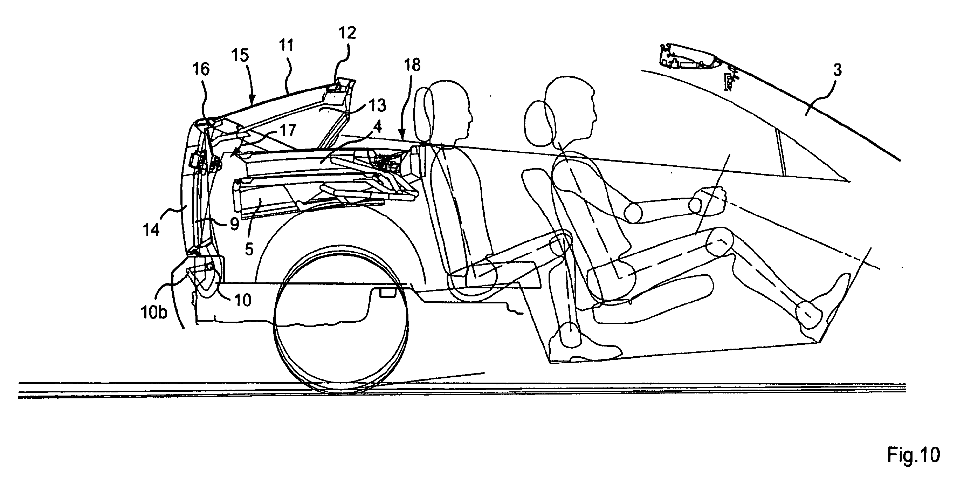

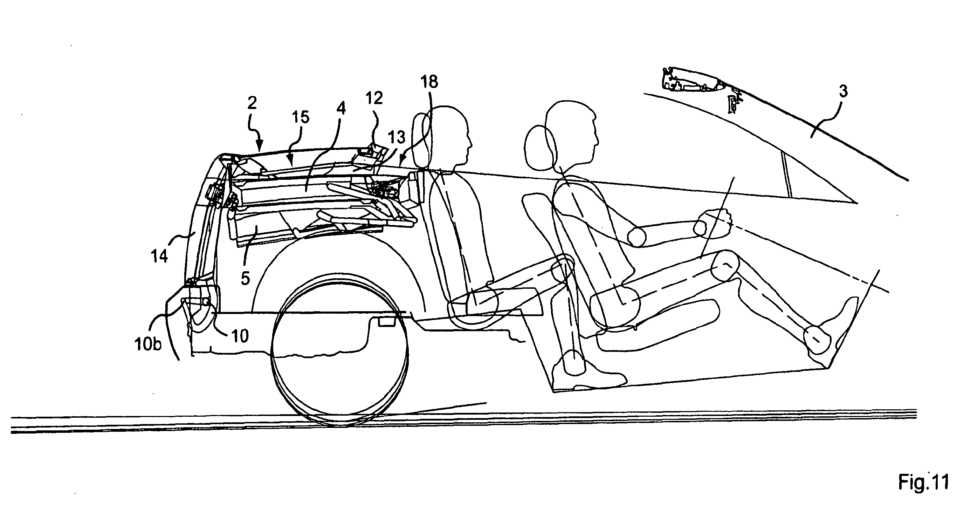

In den Figuren 8 und 9 ist das Einschwenken des oberen Bereichs 15 bei geöffnetem Bewegungsrahmen 9 dargestellt. In dieser eingeschwenkten Stellung kann dann (Fig. 10) der Bewegungsrahmen 9 geschlossen werden, so dass der obere Bereich 15 bei Schließen des Bewegungsrahmens 9 in der Karosserie 8 unterhalb der Fensterbrüstungslinie 18 oder im Bereich dieser Ebene ablegbar ist. Dadurch ist dann (Fig. 11) eine Vollcabriolet-Stellung gebildet.

Es ist nicht zwingend, dass zunächst der obere Bereich 15 vollständig in Richtung des Pfeils 17 eingeschwenkt und erst dann der Bewegungsrahmen 9 um die Achse 10 wieder geschlossen wird, sondern die Bewegungen können sich zeitverkürzend teilweise überlagern.

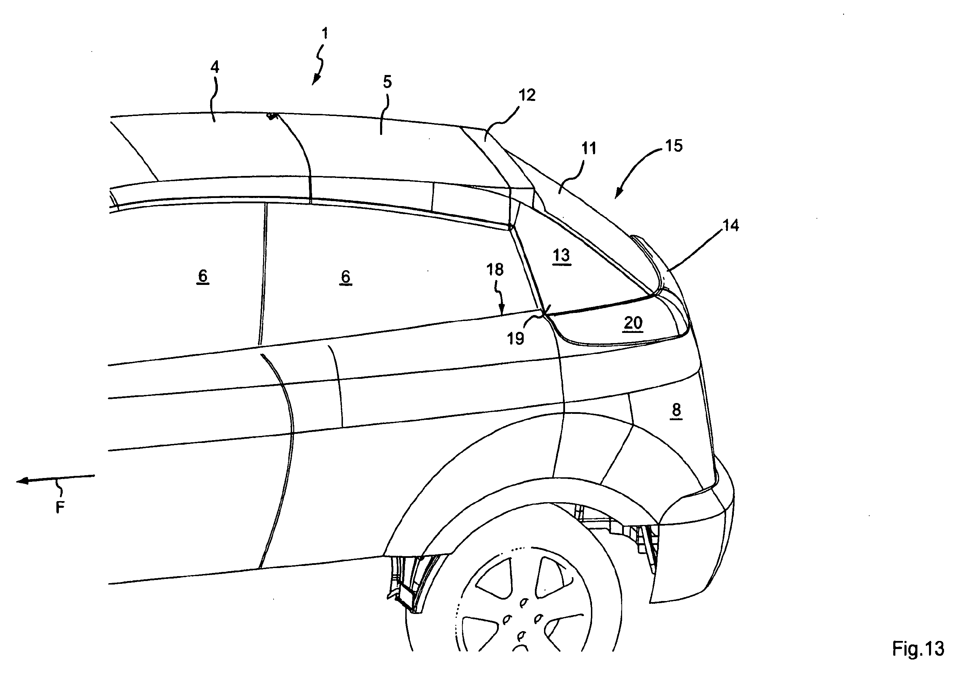

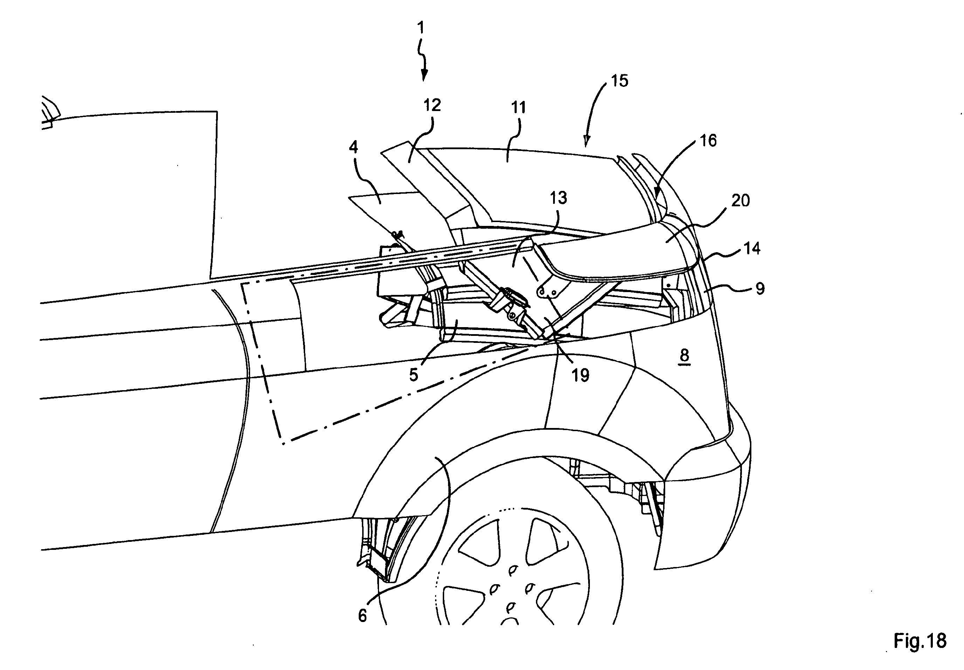

In jedem Fall wird das untere vordere Ende 19 der seitlichen Säule 13 jedoch zunächst von seiner auf einer Dichtung der Fensterbrüstungslinie 18 aufstehenden Lage, die es in der Stellung nach Figur 13 bei geschlossenem Bewegungsrahmen 9 hat und aus der heraus es nicht absenkbar wäre, durch die Öffnung des Bewegungsrahmens 9 erst nach hinten verlagert und kann dann bei Verlagerung in Richtung des Pfeils 17 frei nach unten tauchen, ohne von der Dichtung oder anderen Karosserieteilen, insbesondere auch einer abgesenkten Seitenscheibe 6, behindert zu werden. Die Endstellung des Endes 19 ist dann auch so weit hinter oder über der abgesenkten Seitenscheibe 6, die in Figur 18 gestrichelt eingezeichnet ist, dass dort jede Kollisionsgefahr ausgeschlossen ist.

Die Absenkung auch des oberhalb der Fensterbrüstungslinie 18 gelegenen Bereichs 15 des Heckscheibe 11 und -klappe 14 tragenden Bewegungsrahmens 9 ist daher erst durch die vorherige Öffnung des Bewegungsrahmens 9 nach hinten ermöglicht. Damit müssen auch die Dichtungsverhältnisse gegenüber herkömmlichem Stand der Technik nicht überarbeitet werden: Die hintere Seitenscheibe 6 kann zum Schließen gegen eine äußere Dichtung der Säule 13 anlaufen, diese kann nach unten hin auf der äußeren, horizontalen Dichtung des Fensterschachts aufstehen.

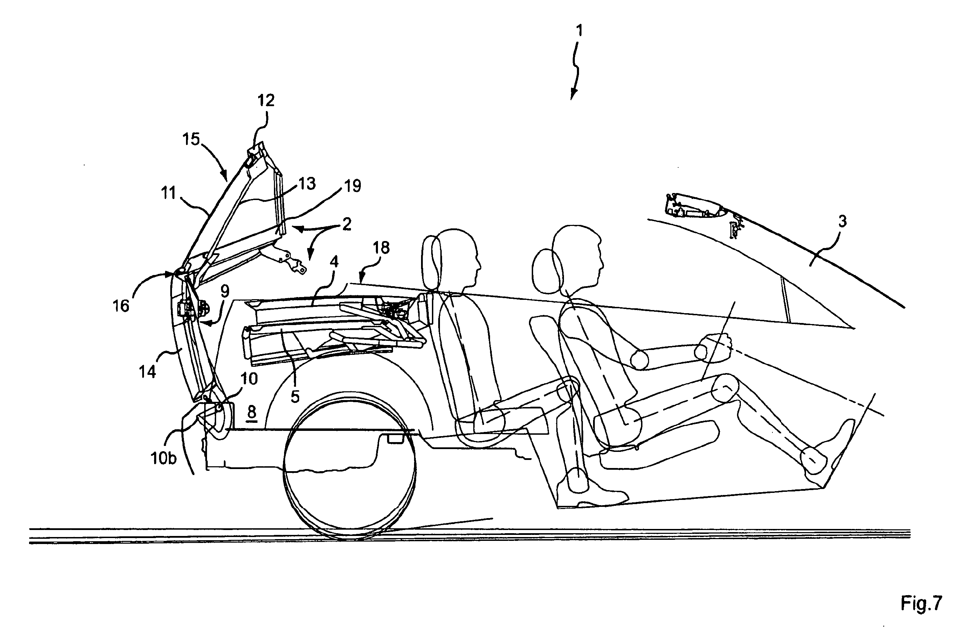

Als alternative stabile Fahrstellung kann es je nach Wetter und Momentanbedürfnis des Fahrers auch möglich sein, dass der Bewegungsrahmen 9 aus seiner Offenstellung nach Figur 7 nach Ablage der Dachteile 4, 5 wieder ohne Einschwenken des oberen Bereichs 15 vorwärts geschwenkt wird und dann in herkömmlicher Weise eine Teilcabriolet-Stellung mit einem hoch aufragenden hinteren Rahmen 9 gebildet ist. Der Bewegungsrahmen 9 kann mit den Säulen 12, 13 zusätzlich als Überrollbügel und mit der Heckscheibe 11 als Windschott wirken.

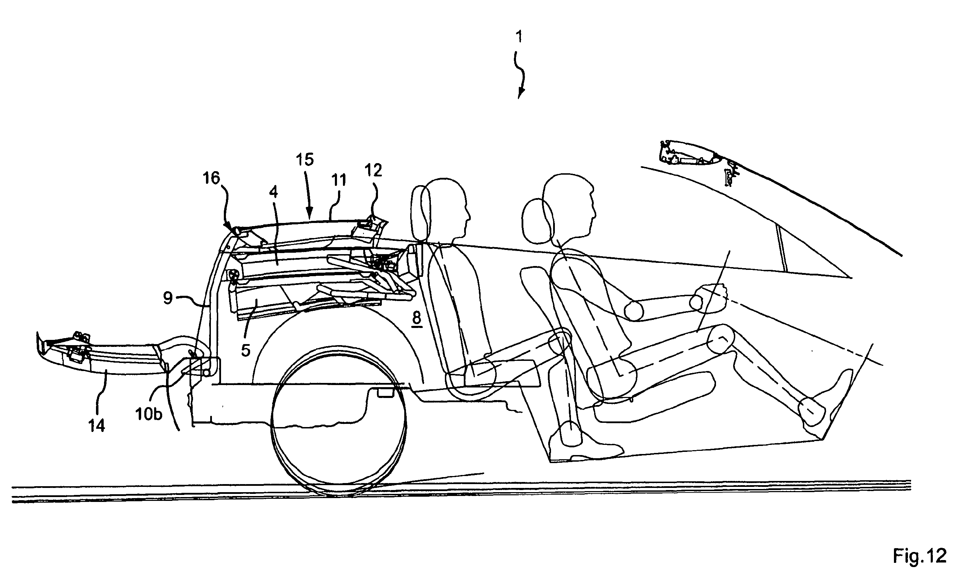

Wie in Figur 12 sichtbar ist, kann bei geschlossenem Bewegungsrahmen 9, unabhängig von der Lage des oberen Bereichs 15, die Heckklappe 14 in jeweils gleicher Weise geöffnet werden, so dass hier unter dem abgelegten Dach 2 ein Kofferraum von hinten sehr gut zugänglich ist. Die Gepäckstücke können unter das Dach 2 eingeschoben werden, ohne sie zunächst absenken und dann an einer Stufe vorbei nach vorne verbringen zu müssen. Damit können auch sperrige Gegenstände gut eingeladen werden.

## Patentansprüche

1. Kraftfahrzeug (1) mit einem Steilheck und einem im unteren Bereich (10) an einer Karosserie (8) beweglich gehaltenen und öffnungsfähigen heckseitigen Bewegungsrahmen (9), mit dem eine Heckklappe (14) beweglich ist und dem zumindest ein über die Dachbreite erstreckter öffnungsfähiger Dachteil (4;5) vorgeordnet ist,
**dadurch gekennzeichnet,**
**dass** der Bewegungsrahmen (9) einen separat beweglichen oberen Bereich (15) umfasst, der in Öffnungsstellung des Bewegungsrahmens (9) nach vorne und abwärts verlagerbar und so bei Schließen des Bewegungsrahmens (9) in der Karosserie (8) ablegbar ist.

2. Kraftfahrzeug (1) nach Anspruch 1,
**dadurch gekennzeichnet,**
**dass** der separat bewegliche Bereich (15) eine Heckscheibe (11) einfassende Karosseriesäulen (13), insbesondere C- oder D-Säulen, umfasst.

3. Kraftfahrzeug (1) nach Anspruch 2,
**dadurch gekennzeichnet,**
**dass** die Heckscheibe (11) gesondert beweglich gehalten ist.

4. Kraftfahrzeug (1) nach Anspruch 3,
**dadurch gekennzeichnet,**
**dass** die Heckscheibe (11) bei geschlossenem Bewegungsrahmen (9) nach oben aufschwenkbar ist.

5. Kraftfahrzeug (1) nach Anspruch 4,
**dadurch gekennzeichnet,**
**dass** der Bewegungsrahmen (9) eine mit diesem bewegliche Heckklappe (14) trägt.

6. Kraftfahrzeug (1) nach einem der Ansprüche 1 bis 5,
**dadurch gekennzeichnet,**
**dass** der separat bewegliche Bereich (15) bei geöffnetem Bewegungsrahmen (9) um eine quer zum Fahrzeug gelegene Achse (16) nach vorne schwenkbar an einen unteren Bereich des Bewegungsrahmens (9) angelenkt ist.

7. Kraftfahrzeug (1) nach einem der Ansprüche 1 bis 6,
**dadurch gekennzeichnet,**
**dass** der vorgeordnete öffnungsfähige Dachteil bei geöffnetem Bewegungsrahmen (9) auf- und zubeweglich ist.

8. Kraftfahrzeug (1) nach einem der Ansprüche 1 bis 7,
**dadurch gekennzeichnet,**
**dass** der öffnungsfähige Dachteil mehrere aufeinander folgende und in sich starre oder zumindest einen jeweils starren Rahmen aufweisende Plattenteile (4;5) umfasst.

## Claims

1. A motor vehicle (1), comprising a hatchback and an openable, rear moving frame (9) which is movably supported on a vehicle body (8) in the lower portion (10), a tailgate (14) being movable together with said moving frame (9), and an openable roof part (4;5), which extends over the width of the roof, being arranged in front of said moving frame,
**characterised in that**
the moving frame (9) comprises a separately movable upper portion (15) which can be moved forwards and downwards in the opening position of the moving frame (9) and can thus be stowed in the vehicle body (8) when closing the moving frame (9).

2. The motor vehicle (1) according to claim 1, **characterised in that** the separately movable portion (15) comprises vehicle body pillars (13), in particular C or D pillars, bordering a rear window (11).

3. The motor vehicle (1) according to claim 2, **characterised in that** the rear window (11) is supported so as to be separately movable.

4. The motor vehicle (1) according to claim 3, **characterised in that** the rear window (11) can be swung open upwards when the moving frame (9) is closed.

5. The motor vehicle (1) according to claim 4, **characterised in that** the moving frame (9) carries a tailgate (14) which can be moved together with the moving frame (9).

6. The motor vehicle (1) according to any one of claims 1 to 5, **characterised in that**, when the moving frame (9) is open, the separately movable portion (15) is articulated to a lower portion of the moving frame (9) so as to pivot forward about an axis (16) which extends transversely to the vehicle.

7. The motor vehicle (1) according to any one of claims 1 to 6, **characterised in that** the preceding, openable roof part can be opened and closed when the moving frame (9) is open.

8. The motor vehicle (1) according to any one of claims 1 to 7, **characterised in that** the openable roof part comprises a plurality of consecutive plate parts (4;5), which are inherently rigid or at least each comprise a rigid frame.

## Revendications

1. Véhicule automobile (1), comprenant un break et un cadre de déplacement (9) arrière ouvrable, qui est supporté de manière mobile sur une carrosserie (8) dans la région inférieure (10), un hayon (14) étant déplaçable avec ledit cadre de déplacement (9), et une partie de toit ouvrable (4;5) qui s'étend sur toute la largeur du toit étant disposée devant ledit cadre de déplacement,
**caractérisé en ce que**
le cadre de déplacement (9) comprend une région supérieure (15), mobile individuellement, que l'on peut déplacer vers l'avant et vers le bas en position d'ouverture du cadre de déplacement (9) et que l'on peut ranger ainsi dans la carrosserie (8) lors de la fermeture du cadre de déplacement (9).

2. Véhicule automobile (1) selon la revendication 1, **caractérisé en ce que** la région (15) mobile individuellement comprend des montants de carrosserie (13), notamment des montants C ou D, qui bordent une lunette arrière (11).

3. Véhicule automobile (1) selon la revendication 2, **caractérisé en ce que** la lunette arrière (11) est supportée de manière à être mobile individuellement.

4. Véhicule automobile (1) selon la revendication 3, **caractérisé en ce que** l'on peut ouvrir la lunette arrière (11) par un pivotement vers le haut lorsque le cadre de déplacement (9) est fermé.

5. Véhicule automobile (1) selon la revendication 4, **caractérisé en ce que** le cadre de déplacement (9) porte un hayon (14) qui est déplaçable avec le cadre de déplacement (9).

6. Véhicule automobile (1) selon l'une quelconque des revendications 1 à 5, **caractérisé en ce que**, le cadre de déplacement (9) étant ouvert, la région (15) mobile individuellement est articulée à une région inféreure du cadre de déplacement (9) de manière à permettre son pivotement vers l'avant autour d'un axe (16) qui s'étend transversalement par rapport au véhicule.

7. Véhicule automobile (1) selon l'une quelconque des revendications 1 à 6, **caractérisé en ce que** l'on peut ouvrir et fermer la partie de toit ouvrable avant lorsque le cadre de déplacement (9) est ouvert.

8. Véhicule automobile (1) selon l'une quelconque des revendications 1 à 7, **caractérisé en ce que** la partie de toit ouvrable comprend plusieurs parties en forme de plaques (4;5), qui présentent une rigidité inhérente ou comprennent chacune au moins un cadre rigide.
